# EUROPÄISCHE PATENTSCHRIFT

(11) **EP 3 539 808 B1**
(45) Veröffentlichungstag und Bekanntmachung des Hinweises auf die Patenterteilung: **02.04.2025**
(21) Anmeldenummer: 19158976.1
(22) Anmeldetag: 25.02.2019
(51) Int. Cl.: B60K 5/12, B60K 1/00

(54) **ANORDNUNG ZUR ANTRIEBSLAGERUNG**
ASSEMBLY FOR DRIVE BEARING
AGENCEMENT POUR PALIER D'ENTRAÎNEMENT

(30) Priorität: 12.03.2018 DE 102018105593
(43) Veröffentlichungstag der Anmeldung: 18.09.2019
(73) Patentinhaber: MAN Truck & Bus SE, 80995 München (DE)
(72) Erfinder: Hamel, Reinhard, 80469 München (DE); Hestermann, Ines, 80799 München (DE); Lang, Christian, 91332 Heiligenstadt (DE); Leisch, Andreas, 80999 München (DE); Peter, Kolja, 81541 München (DE); Schwedes, Patrick, 80639 München (DE)
(74) Vertreter: v. Bezold & Partner Patentanwälte - PartG mbB

(56) Entgegenhaltungen:
- WO-A2-2013/071128
- US-A1- 2010 101 885
- US-A1- 2012 255 804
- US-A1- 2017 036 698

## Beschreibung

Die Erfindung betrifft eine Anordnung zur Antriebslagerung, insbesondere für ein Kraftfahrzeug, vorzugsweise für ein Nutzfahrzeug.

Im Stand der Technik ist eine Vielzahl von Antriebslagerungen bekannt, die eine Antriebseinheit eines Kraftfahrzeugs an einem Fahrzeugrahmen des Kraftfahrzeugs lagern.

Die DE 102 41 271 B4 offenbart ein Antriebsmodul für einen Omnibus, mit einem einen Motor und ein Getriebe aufweisenden Antriebsaggregat, einem Tragrahmen für ein Nebenaggregat und Einbaumitteln zum Verbinden des Antriebsaggregates und des Nebenaggregates mit dem Fahrzeugaufbau. Ein gelöstes Antriebsaggregat ist nach unten vom Fahrzeugaufbau wegbewegbar.

Die US 2005/0211497 A1 offenbart eine Antriebslagerung für ein Fahrzeug mit Heckmotor, insbesondere Bus, bei dem der Antriebsmotor und das Getriebe einachsig aufgebaut sind, um eine starre und stabile Einheit zu bilden. Das Getriebe ist in einem Aufbau eines Heckmotorbusses eingebaut. Das Getriebe ist in einen Getriebeträgerrahmen eingebettet.

Die US 4,362,221 offenbart ein Rad- und Motorträgersystem. Ein Motorträgerrahmen trägt einen sich in Fahrzeugquerrichtung ausgerichteten Verbrennungsmotor.

Bekannte Antriebslagerungen sind typischerweise zur Lagerung von Verbrennungskraftmaschinen konzipiert und dementsprechend an deren spezielle Anforderungen angepasst. Die Integration von elektrischen Antriebseinheiten in Kraftfahrzeugen, insbesondere in Nutzfahrzeugen, kann andere Anforderungen stellen und Möglichkeiten eröffnen. Bspw. können andere Anforderungen und Möglichkeiten hinsichtlich des Bauraums, der Montage und/oder der Lagerungscharakteristika bestehen.

Die US 2012/255804 A1 offenbart ein Kraftfahrzeug, das ein röhrenförmiges Chassis mit allgemeiner Rechteckform, das an der Karosserie des Fahrzeugs in der Nähe des Fahrwerks befestigt ist, aufweist. Eine elektromotorische Einheit und ein Versorgungsmodul sind an jeder Seite des Chassis befestigt, wobei die Oberseite des Chassis eine Plattform bildet, die das Versorgungsmodul trägt.

Die US 2010/101885 A1 offenbart ein Elektrofahrzeug mit einer Antriebseinheit, die auf einer ersten Seite einer Fahrzeugkarosserie angeordnet ist, die in der Längsrichtung des Fahrzeugs betrachtet eine Endseite des Fahrzeugs ist, durch mehrere Halter auf der Fahrzeugkarosserie gehalten wird und das Fahrzeug antreibt.

Die WO 2013/071128 A2 1 offenbart eine elektrische Antriebsstranganordnung für ein Fahrzeug aufweisend eine Elektromotoranordnung mit mindestens einem Elektromotor. Ein erstes Ende der Elektromotoranordnung ist mit einem ersten Ende eines Gestells und ein zweites Ende der Elektromotoranordnung ist mit einem zweiten Ende des Gestells verbunden, so dass eine geschlossene Struktur mit dem Gestell gebildet wird, wobei im Gebrauch die Öffnung des Gestells im Fahrzeug nach hinten weist.

Die US 2017/036698 A1 offenbart eine Hilfsrahmenstruktur, die mit linken und rechten Seitenelementen versehen ist, die sich in dem Fahrzeug nach vorne und hinten erstrecken, und einem hinteren Querelement versehen ist, das sich seitlich im Fahrzeug erstreckt. Eine Fahrzeug-Antriebsanlage wie etwa ein Motor ist über eine Schwingungsdämpfvorrichtung und an einem Karosserierahmen gelagert.

Der Erfindung liegt die Aufgabe zu Grunde, eine alternative und/oder verbesserte Anordnung zur Antriebslagerung, insbesondere für ein Kraftfahrzeug, vorzugsweise für ein Nutzfahrzeug zu schaffen. Insbesondere sollen Nachteile aus dem Stand der Technik überwunden und/oder eine elektrische Antriebseinheit gelagert werden.

Die Aufgabe wird gelöst durch die Merkmale gemäß dem unabhängigen Anspruch 1. Vorteilhafte Weiterbildungen sind in den abhängigen Ansprüchen und der Beschreibung angegeben.

Die Anordnung zur Antriebslagerung ist insbesondere für ein Kraftfahrzeug, vorzugsweise ein Nutzfahrzeug (z. B. ein Heckantrieb-Nutzfahrzeug) geeignet. Die Anordnung weist eine Trägerkonstruktion, insbesondere eine Querträgerkonstruktion, auf. Die Anordnung weist eine, insbesondere elektrische, Antriebseinheit (z. B. aufweisend einen Elektromotor und ein Getriebe) auf. Die Antriebseinheit ist in einer 3-Punkt-Lagerung an einer Unterseite und/oder von unten her (z. B. vom Boden her und/oder von einer Bodenseite her) an der Trägerkonstruktion (z. B. lösbar oder nicht-lösbar) angebracht (z. B. montiert, befestigt, aufgehängt, gelagert).

Vorteilhafterweise kann die Antriebseinheit damit dem Kraftfahrzeug heckseitig zugeführt werden. Die Antriebseinheit kann zweckmäßig angehoben werden, um dann an einer Unterseite bzw. von unten an der Trägerkonstruktion angebracht zu werden. Dies kann bspw. hilfreich sein, wenn für ein heckseitiges Einschieben mit anschließendem Absenken der Antriebseinheit auf einen Tragrahmen oder eine Tragplatte nicht genügend oder kaum Platz vorhanden ist. Die 3-Punkt-Lagerung ermöglicht eine schnelle Montage. Zudem wird eine statische Überbestimmtheit der Lagerung durch zu viele Lagerungsstellen (z. B. vier oder mehr) verhindert.

Zweckmäßig kann die Antriebseinheit abgesehen von der 3-Punkt-Lagerung nicht anderweitig am Fahrzeugrahmen gelagert sein.

Insbesondere kann die Antriebseinheit nur hängend gelagert sein und/oder nicht von einer Bodenseite der Antriebseinheit her abgestützt sein.

Vorzugsweise kann die Antriebseinheit nur von unten her und/oder nur an der Unterseite der Trägerkonstruktion angebracht sein.

Es ist möglich, dass die Antriebseinheit in einem von der Trägerkonstruktion gelösten Zustand nach unten wegbewegbar und/oder in Fahrzeugheckrichtung bzw. Fahrzeugrahmenheckrichtung (Fahrzeuglängsrichtung) wegbewegbar ist.

Es ist auch möglich, dass die Anordnung in einer Vorwärtsfahrtrichtung des Kraftfahrzeugs gesehen hinter einer (angetriebenen) Hinterachse des Kraftfahrzeugs angeordnet ist. Alternativ kann die Anordnung bspw. in einer Vorwärtsfahrtrichtung des Kraftfahrzeugs gesehen vor einer (angetriebenen) Hinterachse des Kraftfahrzeugs angeordnet sein.

In einem bevorzugten Ausführungsbeispiel weist die Anordnung mehrere Lagereinheiten, insbesondere exakt drei Lagereinheiten, auf. Die mehreren Lagereinheiten sind an einer Unterseite und/oder von unten her an der Trägerkonstruktion (z. B. an Verstärkungselementen insbesondere an einer Unterseite z. B. von Querträgern der Trägerkonstruktion) angebracht (z. B. montiert, befestigt, aufgehängt, gelagert) und tragen die Antriebseinheit.

Beispielsweise können die exakt drei Lagereinheiten die 3-Punkt-Lagerung bilden.

In einem Ausführungsbeispiel sind die mehreren Lagereinheiten an der Antriebseinheit vormontiert und/oder angebracht, bevor die Antriebseinheit an der Trägerkonstruktion angebracht wird. Alternativ oder zusätzlich bilden die mehreren Lagereinheiten und die Antriebseinheit eine Zusammenbaumontageeinheit zur (z. B. einheitlichen, gemeinsamen und/oder gleichzeitigen) Montage an der Trägerkonstruktion.

In einem weiteren Ausführungsbeispiel tragen die mehreren Lagereinheiten die Antriebseinheit direkt. Somit muss bspw. kein separater Tragrahmen o. ä. vorgesehen sein.

In einer Ausführungsform sind die mehreren Lagereinheiten (im Wesentlichen) als Gleichteile ausgebildet. Damit können Montagefehler verhindert und Kosten eingespart werden.

In einer weiteren Ausführungsform sind die mehreren Lagereinheiten zumindest teilweise in unterschiedlichen Orientierungen an der Trägerkonstruktion montiert. Alternativ oder zusätzlich ist mindestens eine Lagereinheit der mehreren Lagereinheiten auf dem Kopf stehend und/oder umgedreht montiert im Vergleich mit mindestens einer anderen der übrigen Lagereinheiten. Hierdurch kann bspw. auf besondere Gegebenheiten des Bauraums reagiert und/oder eine Montage vereinfacht werden.

In einer Ausführungsvariante sind eine erste Lagereinheit und eine zweite Lagereinheit der mehreren Lagereinheiten an einer Abtriebsseite der Antriebseinheit angebracht. Insbesondere können diese Lagereinheiten das von der Antriebseinheit abgegebene Moment im Wesentlichen, z. B. zu mehr als 90 %, abstützen. Alternativ oder zusätzlich ist eine dritte Lagereinheit der mehreren Lagereinheiten auf einer der Abtriebsseite entgegengesetzten Seite der Antriebseinheit angebracht.

Insbesondere können die erste Lagereinheit und/oder die zweite Lagereinheit außenliegend und/oder in einem oberen Bereich an der Abtriebsseite angeordnet sein. Damit kann beispielsweise eine möglichst große Hebelwirkung zum Abstützen des Abtriebdrehmoments der Antriebseinheit erreicht werden.

Beispielsweise können die erste Lagereinheit und/oder die zweite Lagereinheit an dem Antriebsmotor der Antriebseinheit und/oder neben/außenliegend von dem Getriebe der Antriebseinheit angeordnet sein. Ein Durchmesser des Getriebes kann beispielsweise kleiner als ein Durchmesser der Antriebseinheit sein, sodass durch diese Anordnung Bauraum eingespart werden kann.

Zweckmäßig kann die dritte Lagereinheit zentral an der der Abtriebsseite entgegengesetzten Seite der Antriebseinheit, insbesondere am Antriebsmotor der Antriebseinheit, angeordnet sein.

Es ist möglich, dass die dritte Lagereinheit im Vergleich zu der zweiten Lagereinheit und der erste Lagereinheit sozusagen auf dem Kopf steht bzw. umgedreht ist. Dies kann die Montage erleichtern.

Erfindungsgemäß weisen die mehreren Lagereinheiten jeweils einen Tragarm und mindestens ein Elastomerelement auf.

Es ist auch möglich, dass die mehreren Elastomerelemente einer Lagereinheit miteinander verbunden sind und/oder integral-einstückig ausgebildet sind.

Zweckmäßig ist das mindestens eine Elastomerelement im Einbauzustand der Antriebseinheit zwischen dem Tragarm und der Trägerstruktur verspannt.

Erfindungsgemäß ist der Tragarm aus einem Kunststoff, insbesondere einem faserverstärkten Kunststoff, vorzugsweise einem glasfaserverstärkten Kunststoff, hergestellt. Ein solcher Tragarm kann Vorteile hinsichtlich Gewicht und Kosten bieten. Alternativ kann der Tragarm bspw. aus einem Metall, insbesondere als Metallgussteil, vorzugsweise als Aluminiumdruckgussteil, hergestellt sein. Es ist auch möglich, den Tragarm aus einem anderen Material herzustellen.

In einem Ausführungsbeispiel ist der Tragarm direkt an der Antriebseinheit befestigt ist (z. B. lösbar, nicht-lösbar, verschraubt, geschweißt usw.). Erfindungsgemäß ist das mindestens eine Elastomerelement direkt an der Trägerkonstruktion befestigt (z. B. lösbar, nicht-lösbar, verschraubt, geschweißt usw.).

Alternativ oder zusätzlich weist der Tragarm eine Montageplatte, die direkt an der Antriebseinheit befestigt ist (z. B. lösbar, nicht-lösbar, verschraubt, geschweißt usw.), und/oder eine Auskragung, an der das mindestens eine Elastomerelement angebracht ist, auf. Beispielsweise können ein erstes Elastomerelement und ein zweites Elastomerelement auf entgegengesetzten Seiten einer Auskragung des Tragarms angeordnet sein.

In einem weiteren Ausführungsbeispiel ist das mindestens eine Elastomerelement, insbesondere ringförmig, mit einem Durchgangsloch ausgebildet, in dem ein Befestigungselement aufgenommen ist, das das mindestens eine Elastomerelement an der Trägerkonstruktion, insbesondere verspannt, befestigt. Alternativ oder zusätzlich sind die mehreren Lagereinheiten jeweils mittels lediglich eines Befestigungselements, insbesondere einer Schraube, an der Trägerkonstruktion montiert.

In einer Ausführungsform ist die Antriebseinheit an einem nach oben gebogenen, nach oben gekrümmten und/oder nach oben gewölbten Bereich der Trägerkonstruktion, insbesondere eines ersten Querträgers und/oder eines zweiten Querträgers der Trägerkonstruktion, angebracht (z. B. montiert, befestigt, aufgehängt, gelagert). Der nach oben gebogene, gekrümmte und/oder gewölbte Bereich kann zusätzlichen Bauraum für eine oder mehrere Lagereinheiten und/oder die Antriebseinheit schaffen.

In einer weiteren Ausführungsform ist die Antriebseinheit nicht geneigt gelagert (d. h. 0° Neigung). Alternativ ist die Antriebseinheit geneigt gelagert; die Antriebseinheit zu einer Horizontalebene der Trägerkonstruktion und/oder des Kraftfahrzeugs geneigt gelagert; und/oder die Antriebseinheit zu einer Vertikallängsebene der Trägerkonstruktion und/oder des Kraftfahrzeugs geneigt gelagert. Die geneigte Lagerung kann eine erleichterte Anbindung an einen Achsflansch, der eine entsprechend geneigte Orientierung aufweist, ermöglichen.

In einer Ausführungsvariante weist die Trägerkonstruktion einen ersten Querträger und einen zweiten Querträger auf und die Antriebseinheit ist insbesondere nur an dem ersten Querträger und dem zweiten Querträger montiert. Alternativ oder zusätzlich ist die Antriebseinheit im Wesentlichen unterhalb der Trägerkonstruktion (z. B. eines ersten Querträgers und eines zweiten Querträgers der Trägerkonstruktion) positioniert.

In einer weiteren Ausführungsvariante ist die Anordnung als eine Heckantriebseinheitlagerung eines Nutzfahrzeugs, insbesondere eines Omnibusses (z. B. Stadtbus) oder eines Lastkraftwagens (z. B. Verteiler-LKW, Stadt-LKW), ausgeführt. Alternativ oder zusätzlich bildet die Trägerkonstruktion eine insbesondere fahrzeugheckseitig zugängliche Aussparung in einem Fahrzeugrahmen zur Aufnahme der Antriebseinheit. Damit kann die Antriebseinheit zur Montage heckseitig zugeführt werden.

Zweckmäßig kann die Antriebseinheit in einer Längsrichtung eines Fahrzeugrahmens und/oder des Kraftfahrzeugs ausgerichtet sein.

Die Erfindung ist auch auf ein Kraftfahrzeug, insbesondere ein Nutzfahrzeug (zum Beispiel Omnibus, insbesondere Stadtbus, oder Lastkraftwagen, insbesondere Verteiler-Lastkraftwagen oder Stadt-Lastkraftwagen) aufweisend die hierin offenbarte Anordnung gerichtet.

Es ist auch möglich, die Vorrichtung wie hierin offenbart für Personenkraftwagen, Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer beispielhaften Anordnung zur Lagerung einer Antriebseinheit gemäß der vorliegenden Offenbarung;
- Figur 2: eine Seitenansicht der beispielhaften Anordnung zur Lagerung der Antriebseinheit, wobei die Antriebseinheit transparent gestrichelt dargestellt ist;
- Figur 3: eine Draufsicht der beispielhaften Anordnungen zur Lagerung der Antriebseinheit;
- Figur 4: eine Seitenansicht von Lagereinheiten und der Antriebseinheit der beispielhaften Anordnung;
- Figur 5: eine Schnittansicht entlang einer Linie A-A in Figur 4;
- Figur 6: eine Schnittansicht entlang einer Linie B-B in Figur 4; und
- Figur 7: eine perspektivische Ansicht einer Lagereinheit der beispielhaften Anordnung zur Lagerung der Antriebseinheit

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

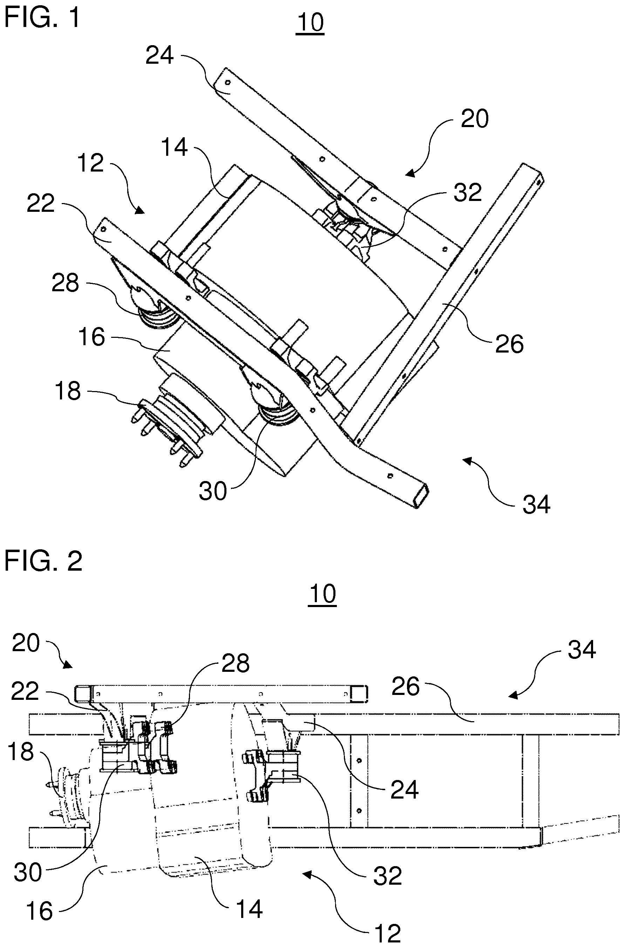

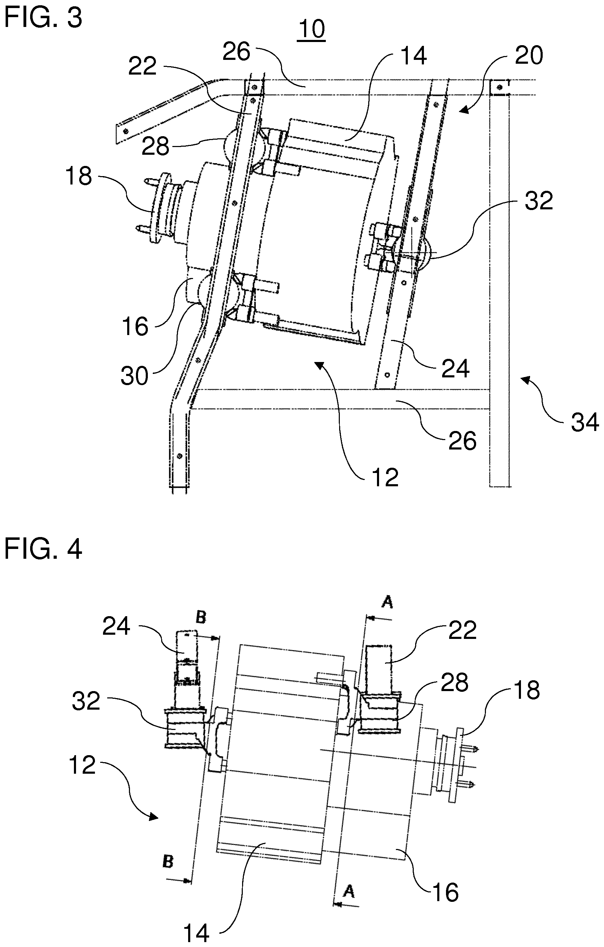

Die Figuren 1 bis 3 zeigen eine Anordnung 10 zur Lagerung einer Antriebseinheit 12. Die Anordnung 10 kann in einem Kraftfahrzeug in einer Vorwärtsfahrtrichtung des Kraftfahrzeugs gesehen hinter einer angetriebenen Hinterachse positioniert sein. Die Anordnung 10 ist als eine Heckantriebslagereinheit insbesondere für ein Nutzfahrzeug ausgebildet. Das Nutzfahrzeug kann beispielsweise ein Omnibus, zum Beispiel ein Stadtbus, oder ein Lastkraftwagen, zum Beispiel ein Stadt-Lastkraftwagen oder ein Verteiler-Lastkraftwagen, sein. Es ist allerdings auch möglich, die Anordnung 10 in anderen Nutzfahrzeugen oder Kraftfahrzeugen zu verwenden und/oder anders zu positionieren.

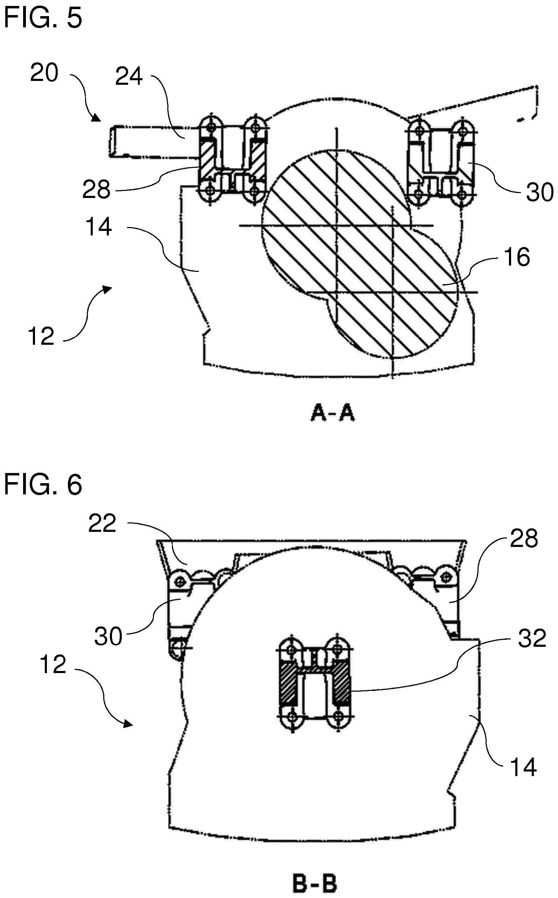

### Nachfolgend ist unter Bezugnahme auf die Figuren 1 bis 7 die Anordnung 10 beispielhaft beschrieben

Die Antriebseinheit 12 kann insbesondere als eine elektrische Antriebseinheit ausgebildet sein. Die Antriebseinheit 12 weist einen Antriebsmotor 14, insbesondere einen Elektromotor, auf. Die Antriebseinheit 12 kann ferner ein Getriebe 16 mit einem Abtriebselement 18 aufweisen. Der Antriebsmotor 14 ist antreibend mit dem Getriebe 16 verbunden. Das Abtriebselement 18 kann mit einem Antriebselement bzw. Hinterachsflansch einer angetriebenen Hinterachse (nicht dargestellt) trieblich verbunden sein.

Die Antriebseinheit 12 ist geneigt an einer Trägerkonstruktion 20 gelagert. Die geneigte Lagerung der Antriebseinheit 12 kann auf eine Orientierung eines Antriebselements bzw. Achsflansches einer angetriebenen (Hinter-) Achse (nicht dargestellt) abgestimmt sein. Durch die Neigung der Antriebseinheit 12 kann eine Ausrichtung des Abtriebselements 18 mit einer Ausrichtung des Antriebselements der angetriebenen Achse (nicht dargestellt) übereinstimmen, die miteinander trieblich zu verbinden sind. Insbesondere kann die Antriebseinheit 12 zu einer Horizontalachse eines Fahrzeugrahmens bzw. Chassis 34 des Kraftfahrzeugs geneigt sein, zum Beispiel in einem Bereich zwischen 0° und 10°. Ferner kann die Antriebseinheit 12 zu einer vertikalen Längsebene des Kraftfahrzeugs geneigt sein, zum Beispiel in einem Bereich zwischen 0° und 15°. Es ist allerdings auch denkbar, dass die Antriebseinheit 12 nicht geneigt gelagert ist.

Die Anordnung 10 weist die Trägerkonstruktion 20 auf. Die Trägerkonstruktion 20 bildet einen Teil des Fahrzeugrahmens 34 des Kraftfahrzeugs. Die Trägerkonstruktion 20 ist als eine Querträgerkonstruktion ausgeführt. Die Trägerkonstruktion 20 weist einen ersten Querträger 22 und einen zweiten Querträger 24 auf. Die Querträger 22 und 24 sind zwischen Längsträgern 26 des Fahrzeugrahmens 34 befestigt. In Vorwärtsfahrtrichtung des Kraftfahrzeugs gesehen ist der erste Querträger 22 vor dem zweiten Querträger 24 angeordnet. In anderen Ausführungsbeispielen sind bspw. andere Anordnungen, insbesondere der Querträger möglich.

Der erste Querträger 22 ist im Aufhängebereich für die Antriebseinheit 12 nach oben gewölbt. Damit kann zusätzlicher Bauraum für die Antriebseinheit 12 geschaffen werden. Es ist auch möglich, dass der zweite Querträger 24 nach oben gewölbt, gekrümmt und/oder gebogen ausgebildet ist, insbesondere im Aufhängebereich für die Antriebseinheit 12. In anderen Ausführungsformen können sich der erste Querträger und der zweite Querträger im Wesentlichen gradlinig erstrecken.

Die Trägerkonstruktion 20 trägt die Antriebseinheit 12. Die Antriebseinheit 12 ist hierbei hängend an der Trägerkonstruktion 20 mittels mehrerer Lagereinheiten 28, 30, 32 angebracht. Insbesondere ist die Antriebseinheit 12 abgesehen von den Lagereinheiten 28, 30, 32 an der Trägerkonstruktion 20 nicht anderweitig getragen oder abgestützt. Die Antriebseinheit 12 ist von unten her an der Trägerkonstruktion 20 montiert. Insbesondere ist die Antriebseinheit 12 ist an einer Unterseite der Trägerkonstruktion 20 montiert.

Die Antriebseinheit 12 ist im Wesentlichen unterhalb der Trägerkonstruktion 20 positioniert. Das Getriebe 16 ist direkt unterhalb des ersten Querträgers 22 positioniert. Der Antriebsmotor 14 ist zwischen den Querträgern 22, 24 und im Wesentlichen unterhalb der Trägerkonstruktion 20 positioniert.

In der dargestellten Ausführungsform ist die Antriebseinheit 12 mittels der ersten Lagereinheit 28 und der zweiten Lagereinheit 30 an einer Unterseite des ersten Querträgers 22 montiert. Mittels der dritten Lagereinheit 32 ist die Antriebseinheit 12 an einer Unterseite des zweiten Querträgers 24 montiert. Damit bilden die drei Lagereinheiten 28, 30, 32 eine 3-Punkt-Anordnung zur Lagerung der Antriebseinheit 12. Die erste Lagereinheit 28 und die zweite Lagereinheit 30 sind an einer Abtriebsseite bzw. Seite des Abtriebselements 18 der Antriebseinheit 12 angeordnet. Die dritte Lagereinheit 32 ist an einer der Abtriebsseite gegenüberliegenden Seite der Antriebseinheit 12 angeordnet.

Die Lagereinheiten 28, 30, 32 sind direkt an der Antriebseinheit 12 vor deren Montage an der Trägerkonstruktion 20 angebaut. Die Lagereinheiten 28, 30, 32 können lösbar, zum Beispiel mittels Verschraubung, an der Antriebseinheit 12 vormontiert sein. Alternativ können die Lagereinheiten 28, 30, 32 nicht-lösbar, zum Beispiel mittels Schweißen, an der Antriebseinheit 12 befestigt sein. Eine Zusammenbau-Montageeinheit aus der Antriebseinheit 12 und den Lagereinheiten 28, 30, 32 wird als eine Einheit an der Trägerkonstruktion 20 montiert. Hierzu wird die Zusammenbau-Montageeinheit von hinten unter die Trägerkonstruktion 20 bewegt. Die Lagereinheiten 28, 30, 32 werden mit entsprechenden Befestigungsbereichen an den Querträgern 22, 24 ausgerichtet. Die Zusammenbau-Montageeinheit wird angehoben. Die Lagereinheiten 28, 30, 32 werden von unten direkt an einer Unterseite der Querträger 22, 24 der Trägerkonstruktion 20 angebracht, insbesondere lösbar angebracht.

Die Lagereinheiten 28, 30, 32 können als Gleichteile ausgeführt sein. Aus Bauraum- und/oder Montagegründen kann es vorteilhaft sein, die Lagereinheiten 28, 30, 32 teilweise in unterschiedlichen Orientierungen zu montieren. Beispielsweise ist in der dargestellten Ausführungsform die dritte Lagereinheit 32 auf dem Kopf stehend bzw. umgedreht bezüglich der ersten und zweiten Lagereinheit 28, 30 orientiert. Durch die Verwendung unterschiedlicher Orientierungen für die Lagereinheiten 28, 30, 32 können diese, auch wenn sie als Gleichteile ausgeführt sind, flexibler eingesetzt werden.

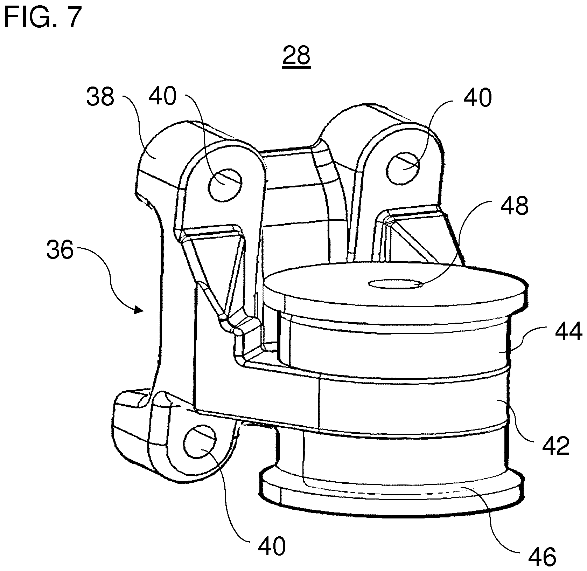

Die Figur 7 zeigt eine beispielhafte Ausführung der ersten Lagereinheit 28. In Ausführungsbeispielen, in denen die Lagereinheiten 28, 30, 32 als Gleichteile ausgeführt sind, gelten die nachfolgenden Erläuterungen somit auch für die Lagereinheiten 30 und 32.

Die erste Lagereinheit 28 weist einen Tragarm 36 auf. Der Tragarm 36 weist eine Montageplatte 38 auf. Die Montageplatte 38 dient zur Befestigung der ersten Lagereinheit 28 an der Antriebseinheit 12. Die Montageplatte 38 weist mindestens ein Durchgangsloch 40 zur Aufnahme von Befestigungselementen (nicht dargestellt) auf. Zum Beispiel weist die Montageplatte 38 vier Durchgangslöcher 40 auf, die an Eckbereichen der Montageplatte 38 angeordnet sind. Beispielsweise kann der Tragarm 36 mittels mehrerer Schrauben, die sich durch die Durchgangslöcher 40 erstrecken, an der Antriebseinheit 12 befestigt werden.

Der Tragarm 36 weist eine Auskragung bzw. einen Vorsprung 42 auf. Die Auskragung 42 erstreckt sich weg von der Montageplatte 38. Die Auskragung 42 ist auf einer der Antriebseinheit 12 abgewandten Seite der Montageplatte 38 angeordnet. Die Auskragung 42 weist ein Durchgangsloch (nicht sichtbar in Figur 7), das sich insbesondere ungefähr in Vertikalrichtung erstreckt, auf. Es ist auch möglich, dass sich das Durchgangsloch geneigt zu einer Vertikalrichtung erstreckt, insbesondere in einer Einbaulage.

Die erste Lagereinheit 28 weist ein erstes Elastomerelement 44 und ein zweites Elastomerelement 46 auf. Die erste Lagereinheit 28 ist mittels der Elastomerelemente 44, 46 an der Trägerkonstruktion 20 angebracht. In einer Einbaulage können die Elastomerelemente 44, 46 vorgespannt sein. Die Vorspannung kann insbesondere zwischen dem Tragarm 36 und der Trägerkonstruktion 20 wirken. Die Vorspannung ergibt sich auch durch die Wechselwirkung zwischen den Elastomerelementen 44, 46 und dem Durchgangsloch in der Auskragung 42.

Die Elastomerelemente 44, 46 können beispielsweise ringförmig ausgebildet sein, wie dargestellt ist. Die Elastomerelemente 44, 46 können beispielsweise aus einem Gummiwerkstoff hergestellt sein. Die Elastomerelement 44, 46 sind aneinander gegenüberliegenden Seitenflächen der Auskragung 42 angeordnet. Die Elastomerelemente 44, 46 weisen jeweils ein Durchgangsloch 48 auf. Die Durchgangslöcher 48 sind fluchtend mit dem Durchgangsloch der Auskragung 42 ausgerichtet. Ein lösbares Befestigungselement kann von unten durch das erste Elastomerelement 44, die Auskragung 42 und das zweite Elastomerelement 46 gesteckt und an der Trägerkonstruktion 20 angebracht werden. Das lösbare Befestigungselement kann beispielsweise eine Schraube sein, die von unten in die Querträger 22, 24 eingeschraubt wird. Bei Verwendung der dargestellten Ausführungsform werden somit nur drei Schrauben zur Anbringung der Zusammenbau-Montageeinheit aus Antriebseinheit 12 und Lagereinheiten 28, 30, 32 an den Querträgern 22, 24 benötigt.

Es ist möglich, dass der Tragarm 36, insbesondere die Montageplatte 38 und die Auskragung 42, aus einem Kunststoff hergestellt ist. Beispielsweise kann ein faserverstärkter Kunststoff, insbesondere ein glasfaserverstärkter Kunststoff, zur Herstellung des Tragarms 36 verwendet werden. Allerdings sind auch andere Werkstoffe denkbar. Z. B. kann der Tragarm 36 ein Aluminiumgussteil sein, insbesondere ein Aluminiumdruckgussteil.

Zweckmäßig können die Elastomerelemente 44, 46 als Gleichteile ausgebildet sein.

Aufgrund neuer Anforderung (Antrieb vs. Rekuperation) durch die Integration von elektrischen Antriebseinheiten können bspw. die Elastomerelemente 44, 46 auch als symmetrische ausgebildet sein.

### Bezugszeichenliste

- 10: Anordnung
- 12: Antriebseinheit
- 14: Antriebsmotor
- 16: Getriebe
- 18: Abtriebselement
- 20: Trägerkonstruktion
- 22: Erster Querträger
- 24: Zweiter Querträger
- 26: Längsträger
- 28: Erste Lagereinheit
- 30: Zweite Lagereinheit
- 32: Dritte Lagereinheit
- 34: Fahrzeugrahmen
- 36: Tragarm
- 38: Montageplatte
- 40: Durchgangsloch
- 42: Auskragung
- 44: Erstes Elastomerelement
- 46: Zweites Elastomerelement
- 48: Durchgangsloch

## Patentansprüche

1. Anordnung (10) zur Antriebslagerung, insbesondere für ein Kraftfahrzeug, vorzugsweise ein Nutzfahrzeug, aufweisend:
eine Trägerkonstruktion (20), insbesondere eine Querträgerkonstruktion;
eine, insbesondere elektrische, Antriebseinheit (12), die in einer 3-Punkt-Lagerung an einer Unterseite und/oder von unten her an der Trägerkonstruktion (20) angebracht ist;
mehrere Lagereinheiten (28, 30, 32), insbesondere exakt drei Lagereinheiten, die an einer Unterseite und/oder von unten her an der Trägerkonstruktion (20) angebracht sind und die die Antriebseinheit (12) tragen,
**dadurch gekennzeichnet, dass**
die mehreren Lagereinheiten (28, 30, 32) jeweils einen Tragarm (36) und mindestens ein Elastomerelement (44, 46) aufweisen;
der Tragarm (36) aus einem Kunststoff, insbesondere einem faserverstärkten Kunststoff, vorzugsweise einem glasfaserverstärkten Kunststoff, hergestellt ist; und
das mindestens eine Elastomerelement (44, 46) direkt an der Trägerkonstruktion (20) befestigt ist.

2. Anordnung (10) nach Anspruch 1, wobei:
die mehreren Lagereinheiten (28, 30, 32) und die Antriebseinheit (12) eine Zusammenbaumontageeinheit zur Montage an der Trägerkonstruktion (20) bilden; und/oder
die mehreren Lagereinheiten (28, 30, 32) die Antriebseinheit (12) direkt tragen.

3. Anordnung (10) nach Anspruch 1 oder Anspruch 2, wobei:
die mehreren Lagereinheiten (28, 30, 32) als Gleichteile ausgebildet sind.

4. Anordnung (10) nach einem der vorherigen Ansprüche, wobei:
die mehreren Lagereinheiten (28, 30, 32) zumindest teilweise in unterschiedlichen Orientierungen an der Trägerkonstruktion (20) montiert sind; und/oder
mindestens eine Lagereinheit (32) der mehreren Lagereinheiten (28, 30, 32) auf dem Kopf stehend und/oder umgedreht montiert ist im Vergleich mit mindestens einer anderen der übrigen Lagereinheiten (28, 30).

5. Anordnung (10) nach einem der vorherigen Ansprüche, wobei:
eine erste Lagereinheit (28) und eine zweite Lagereinheit (30) der mehreren Lagereinheiten (28, 30, 32) an einer Abtriebsseite der Antriebseinheit (12) angebracht sind; und
eine dritte Lagereinheit (32) der mehreren Lagereinheiten (28, 30, 32) auf einer der Abtriebsseite entgegengesetzten Seite der Antriebseinheit (12) angebracht ist.

6. Anordnung (10) nach einem der vorherigen Ansprüche, wobei:
der Tragarm (36) direkt an der Antriebseinheit (12) befestigt ist; und/oder
der Tragarm (36) eine Montageplatte (38), die direkt an der Antriebseinheit (12) befestigt ist, aufweist; und/oder
der Tragarm (36) eine Auskragung (42) aufweist, an der das mindestens eine Elastomerelement (44, 46) angebracht ist; und/oder
ein erstes Elastomerelement (44) und ein zweites Elastomerelement (46) auf entgegengesetzten Seiten einer Auskragung (42) des Tragarms (36) angeordnet sind.

7. Anordnung (10) nach einem der vorherigen Ansprüche, wobei:
das mindestens eine Elastomerelement (44, 46), insbesondere ringförmig, mit einem Durchgangsloch (48) ausgebildet ist, in dem ein Befestigungselement aufgenommen ist, das das mindestens eine Elastomerelement (44, 46) an der Trägerkonstruktion (20), insbesondere verspannt, befestigt; und/oder
wobei die mehreren Lagereinheiten (28, 30, 32) jeweils mittels lediglich eines Befestigungselements, insbesondere einer Schraube, an der Trägerkonstruktion (20) montiert sind.

8. Anordnung (10) nach einem der vorherigen Ansprüche, wobei:
die Antriebseinheit (12) an einem nach oben gebogenen, nach oben gekrümmten und/oder nach oben gewölbten Bereich der Trägerkonstruktion (20), insbesondere eines ersten Querträgers (22) und/oder eines zweiten Querträgers (24) der Trägerkonstruktion (20), angebracht ist.

9. Anordnung (10) nach einem der vorherigen Ansprüche, wobei:
die Antriebseinheit (12) nicht geneigt gelagert ist; oder
die Antriebseinheit (12) geneigt gelagert ist; und/oder
die Antriebseinheit (12) zu einer Horizontalebene der Trägerkonstruktion (20) und/oder des Kraftfahrzeugs geneigt gelagert ist; und/oder
die Antriebseinheit (12) zu einer Vertikallängsebene der Trägerkonstruktion (20) und/oder des Kraftfahrzeugs geneigt gelagert ist.

10. Anordnung (10) nach einem der vorherigen Ansprüche, wobei:
die Trägerkonstruktion (20) einen ersten Querträger (22) und einen zweiten Querträger (24) aufweist und die Antriebseinheit (12) insbesondere nur an dem ersten Querträger (22) und dem zweiten Querträger (24) montiert ist; und/oder
die Antriebseinheit (12) im Wesentlichen unterhalb der Trägerkonstruktion (20) positioniert ist.

11. Anordnung (10) nach einem der vorherigen Ansprüche, wobei:
die Anordnung (10) als eine Heckantriebseinheitlagerung eines Nutzfahrzeugs, insbesondere eines Omnibusses oder eines Lastkraftwagens, ausgeführt ist; und/oder
die Trägerkonstruktion (20) eine fahrzeugheckseitig zugängliche Aussparung in einem Fahrzeugrahmen (34) zur Aufnahme der Antriebseinheit (12) bildet; und/oder
die Antriebseinheit (12) in einer Längsrichtung eines Fahrzeugrahmens und/oder des Kraftfahrzeugs ausgerichtet ist.

12. Kraftfahrzeug, insbesondere Nutzfahrzeug, aufweisend die Anordnung (10) nach einem der vorherigen Ansprüche.

13. Verfahren zur Montage der Anordnung nach einem der vorherigen Ansprüche, aufweisend:
Vormontieren und/oder Anordnen der mehreren Lagereinheiten (28, 30, 32) an der Antriebseinheit (12), bevor die Antriebseinheit (12) an der Trägerkonstruktion (20) angebracht wird.

## Claims

1. An arrangement (10) for mounting a drive, in particular for a motor vehicle, preferably a utility vehicle, comprising:
a carrier structure (20), in particular a crossmember structure;
an, in particular electric, drive unit (12) which is attached in a three-point mounting at a bottom side and/or from below to the carrier structure (20);
a plurality of bearing units (28, 30, 32), in particular exactly three bearing units, which are attached to a bottom side and/or from below to the carrier structure (20) and which carry the drive unit (12),
**characterised in that**
the plurality of bearing units (28, 30, 32) each comprise a supporting arm (36) and at least one elastomeric element (44, 46);
the supporting arm (36) is made of a plastic, in particular a fibre-reinforced plastic, preferably a glass-fibre reinforced plastic; and
the at least one elastomeric element (44, 46) is directly fastened to the carrier structure (20).

2. The arrangement (10) according to claim 1, wherein:
the plurality of bearing units (28, 30, 32) and the drive unit (12) form an assembly unit for mounting on the carrier structure (20); and/or
the plurality of bearing units (28, 30, 32) directly support the drive unit (12).

3. The arrangement (10) according to claim 1 or claim 2, wherein:
the plurality of bearing units (28, 30, 32) are configured as equal parts.

4. The arrangement (10) according to one of the previous claims, wherein:
the plurality of bearing units (28, 30, 32) are mounted on the carrier structure (20) at least partially in different orientations; and/or
at least one bearing unit (32) of the plurality of bearing units (28, 30, 32) is mounted upside down and/or reversed compared to at least one other of the remaining bearing units (28, 30).

5. The arrangement (10) according to any of the preceding claims, wherein:
a first bearing unit (28) and a second bearing unit (30) of the plurality of bearing units (28, 30, 32) are mounted on an output side of the drive unit (12); and
a third bearing unit (32) of the plurality of bearing units (28, 30, 32) is arranged on a side of the drive unit (12) opposite the output side.

6. The arrangement (10) according to one of the previous claims, wherein:
the supporting arm (36) is directly fastened to the drive unit (12); and/or
the supporting arm (36) comprises a mounting plate (38) that is directly fastened to the drive unit (12); and/or
the supporting arm (36) comprises a cantilever (42) to which the at least one elastomeric element (44, 46) is attached; and/or
a first elastomeric element (44) and a second elastomeric element (46) are arranged on opposite sides of a cantilever (42) of the supporting arm (36).

7. The arrangement (10) according to one of the previous claims, wherein:
the at least one elastomeric element (44, 46) is, in particular ring-shaped, configured with a through-hole (48) in which a fastening element is received, which fastening element fastens the at least one elastomeric element (44, 46) to the carrier structure (20), in particular in a clamped manner; and/or
wherein the plurality of bearing units (28, 30, 32) are each mounted on the carrier structure (20) by means of only one fastening element, in particular a screw.

8. The arrangement (10) according to one of the previous claims, wherein:
the drive unit (12) is attached to an upwardly bent, upwardly curved and/or upwardly arched portion of the carrier structure (20), in particular of a first cross beam (22) and/or a second cross beam (24) of the carrier structure (20).

9. The arrangement (10) according to one of the previous claims, wherein:
the drive unit (12) is not mounted at an incline; or
the drive unit (12) is mounted at an incline; and/or
the drive unit (12) is mounted at an incline to a horizontal plane of the carrier structure (20) and/or of the motor vehicle; and/or
the drive unit (12) is mounted inclined to a vertical longitudinal plane of the carrier structure (20) and/or of the motor vehicle.

10. The arrangement (10) according to one of the previous claims, wherein:
the carrier structure (20) comprises a first cross beam (22) and a second cross beam (24) and the drive unit (12) is mounted in particular only on the first cross beam (22) and the second cross beam (24); and/or
the drive unit (12) is positioned substantially below the carrier structure (20).

11. The arrangement (10) according to one of the previous claims, wherein:
the arrangement (10) is configured as a rear-wheel drive unit mounting of a utility vehicle, in particular a bus or a lorry; and/or
the carrier structure (20) forms a recess in a vehicle frame (34), which recess is accessible at the rear of the vehicle for accommodating the drive unit (12); and/or
the drive unit (12) is aligned in a longitudinal direction of a vehicle frame and/or of the motor vehicle.

12. A motor vehicle, in particular a utility vehicle, comprising the arrangement (10) according to one of the previous claims.

13. A method for mounting the arrangement according to one of the previous claims, comprising:
pre-mounting and/or arranging the plurality of bearing units (28, 30, 32) on the drive unit (12) before the drive unit (12) is attached to the carrier structure (20).

## Revendications

1. Un agencement (10) pour palier d'entraînement, en particulier pour un véhicule automobile, de préférence un véhicule utilitaire, présentant :
une structure porteuse (20), en particulier une structure porteuse transversale ;
une unité d'entraînement (12), en particulier électrique, qui est montée dans un palier à 3 points sur un côté inférieur et/ou par le bas sur la structure porteuse (20) ;
une pluralité d'unités formant palier (28, 30, 32), en particulier exactement trois unités formant palier, qui sont montées sur un côté inférieur et/ou par le bas sur la structure porteuse (20) et qui portent l'unité d'entraînement (12),
**caractérisé en ce que**
les unités formant palier de la pluralité d'unités formant palier (28, 30, 32) présentent chacune un bras de support (36) et au moins un élément en élastomère (44, 46) ;
le bras de support (36) est fabriqué en une matière plastique, en particulier une matière plastique renforcée par des fibres, de préférence une matière plastique renforcée par des fibres de verre ; et
ledit au moins un élément en élastomère (44, 46) est fixé directement à la structure porteuse (20).

2. L'agencement (10) selon la revendication 1, dans lequel :
la pluralité d'unités formant palier (28, 30, 32) et l'unité d'entraînement (12) forment une unité de montage d'ensemble pour le montage sur la structure porteuse (20) ; et/ou
la pluralité d'unités formant palier (28, 30, 32) supporte directement l'unité d'entraînement (12).

3. L'agencement (10) selon la revendication 1 ou la revendication 2, dans lequel :
les unités formant palier de la pluralité d'unités formant palier (28, 30, 32) sont réalisées sous forme de pièces identiques.

4. L'agencement (10) selon l'une des revendications précédentes, dans lequel :
les unités formant palier de la pluralité d'unités formant palier (28, 30, 32) sont montées au moins partiellement dans des orientations différentes sur la structure porteuse (20) ; et/ou
au moins une unité formant palier (32) de la pluralité d'unités formant palier (28, 30, 32) est montée à l'envers et/ou inversée par rapport à au moins une autre des unités formant palier (28, 30) restantes.

5. L'agencement (10) selon l'une des revendications précédentes, dans lequel :
une première unité formant palier (28) et une deuxième unité formant palier (30) de la pluralité d'unités formant palier (28, 30, 32) sont montées sur un côté entraînement de l'unité d'entraînement (12) ; et
une troisième unité formant palier (32) de la pluralité d'unités formant palier (28, 30, 32) est montée sur un côté de l'unité d'entraînement (12) opposé au côté entraînement.

6. L'agencement (10) selon l'une des revendications précédentes, dans lequel :
le bras de support (36) est fixé directement à l'unité d'entraînement (12) ; et/ou
le bras de support (36) comprend une plaque de montage (38) fixée directement à l'unité d'entraînement (12) ; et/ou
le bras de support (36) présente une saillie (42) sur laquelle est monté ledit au moins un élément élastomère (44, 46) ; et/ou
un premier élément élastomère (44) et un deuxième élément élastomère (46) sont agencés sur des côtés opposés d'une saillie (42) du bras de support (36).

7. L'agencement (10) selon l'une des revendications précédentes, dans lequel :
ledit au moins un élément en élastomère (44, 46), notamment annulaire, est formé avec un trou traversant (48) dans lequel est reçu un élément de fixation qui fixe, notamment par serrage, ledit au moins un élément en élastomère (44, 46) à la structure porteuse (20) ; et/ou
chaque unité formant palier de la pluralité d'unités formant palier (28, 30, 32) est montée sur la structure porteuse (20) au moyen d'un seul élément de fixation, en particulier d'une vis.

8. L'agencement (10) selon l'une des revendications précédentes, dans lequel :
l'unité d'entraînement (12) est montée sur une zone courbée vers le haut, incurvée vers le haut et/ou bombée vers le haut de la structure porteuse (20), en particulier d'une première poutre transversale (22) et/ou d'une deuxième poutre transversale (24) de la structure porteuse (20).

9. L'agencement (10) selon l'une des revendications précédentes, dans lequel :
l'unité d'entraînement (12) est montée de manière non inclinée ; ou
l'unité d'entraînement (12) est montée de manière inclinée ; et/ou
l'unité d'entraînement (12) est montée de manière inclinée par rapport à un plan horizontal de la structure porteuse (20) et/ou du véhicule automobile ; et/ou
l'unité d'entraînement (12) est montée de manière inclinée par rapport à un plan longitudinal vertical de la structure porteuse (20) et/ou du véhicule automobile.

10. L'agencement (10) selon l'une des revendications précédentes, dans lequel :
la structure porteuse (20) comprend une première traverse (22) et une deuxième traverse (24), et l'unité motrice (12) est notamment montée uniquement sur la première traverse (22) et la deuxième traverse (24) ; et/ou
l'unité d'entraînement (12) est positionnée sensiblement en dessous de la structure porteuse (20).

11. L'agencement (10) selon l'une des revendications précédentes, dans lequel :
l'agencement (10) est réalisé sous la forme d'un palier d'unité d'entraînement arrière d'un véhicule utilitaire, notamment d'un autobus ou d'un camion ; et/ou
la structure porteuse (20) forme un évidement accessible à l'arrière du véhicule dans un châssis de véhicule (34) pour recevoir l'unité d'entraînement (12) ; et/ou
l'unité d'entraînement (12) est orientée dans une direction longitudinale d'un châssis de véhicule et/ou du véhicule automobile.

12. Un véhicule automobile, notamment véhicule utilitaire, présentant l'agencement (10) selon l'une des revendications précédentes.

13. Un procédé de montage de l'agencement selon l'une des revendications précédentes, comprenant :
le fait de pré-assembler et/ou d'agencer la pluralité d'unités formant palier (28, 30, 32) sur l'unité d'entraînement (12) avant de monter l'unité d'entraînement (12) sur la structure porteuse (20).
